# EUROPÄISCHE PATENTSCHRIFT

(11) **EP 1 469 153 B1**
(45) Veröffentlichungstag und Bekanntmachung des Hinweises auf die Patenterteilung: **24.01.2007**
(21) Anmeldenummer: 04006441.2
(22) Anmeldetag: 17.03.2004
(51) Int. Cl.: E05F 5/08, E05F 5/02

(54) **Türschlagdämpfer mit spiralförmiger Bewegung**
Damper for doors with a spiral movement
Amortisseur pour porte avec déplacement hélicoidale

(30) Priorität: 14.04.2003 DE 20305992 U; 26.06.2003 DE 20309874 U
(43) Veröffentlichungstag der Anmeldung: 20.10.2004
(73) Patentinhaber: Arturo Salice S.p.A., I-22060 Novedrate (Como) (IT)
(72) Erfinder:
(74) Vertreter: Laufhütte, Dieter

(56) Entgegenhaltungen:
- DE-A- 3 401 427
- DE-C- 56 719
- DE-U- 20 205 905
- US-A- 4 829 628

## Beschreibung

Die Erfindung betrifft eine Dämpfungsvorrichtung für bewegliche Möbelteile, beispielsweise für Türen oder Schubladen, bestehend aus einem in einem Hohlkörper, z. B. einem Zylinder, gleitend geführten Kolben oder Stößel, der durch Federkraft in seine ausgeschobene Stellung beaufschlagt ist.

Vorrichtungen dieser Art dienen dazu, bewegliche Möbelteile, beispielsweise Türen, Klappen oder Schubladen, beim schwungvollen Bewegen in ihre Schließstellung abzubremsen, um Geräusche beim Anstoßen an Korpusteile von Möbeln oder festen Teilen und Stoßbeanspruchungen zu verringern. Bei bekannten Vorrichtungen dieser Art werden die der Dämpfung oder dem Abbremsen der Möbelteile dienenden Dämpfungseinrichtungen nur über einen verhältnismäßig kleinen Weg im Schließbereich der beweglichen Möbelteile beaufschlagt, so dass sie nur eine entsprechend geringe Dämpfung oder Abbremsung zu bewirken vermögen.

In den älteren, aber nicht vorveröffentlichten Gebrauchsmustern 20 302 524.4 und 20 303 534.8 sind Vorrichtungen zur Dämpfung der Bewegung beweglicher Möbelteile beschrieben, bei denen zur Erreichung einer starken Abbremsung und Dämpfung der Möbelteile deren verhältnismäßig kleine Schließbewegung über mindestens zweistufige Getriebemittel mit einem Übersetzungsverhältnis ins Schnelle auf einen Rotationsdämpfer oder den Kolben eines Dämpfungszylinders übertragen wird. Diese Dämpfungsvorrichtungen sind wegen der notwendigen zweistufigen Getriebemittel verhältnismäßig aufwendig.

Aus DE-56719 C ist dabei ein Türschlagdämpfer bekannt, bei dem ein als Gewindestange ausgeführter Stößel so in einem Hohlkörper angebracht ist, dass er von einer Feder nach vorne gedrückt wird und sich in einem an der Vorderseite des Hohlkörpers angeordneten Innengewinde abstützt, so dass eine zufallende Tür durch die Reibung zwischen den Gewinden abgebremst wird.

Aufgabe der Erfindung ist es daher, eine kostengünstig herstellbare Dämpfungsvorrichtung zu schaffen, die über die Wirkung der Gewindestange hinaus auch bei einem kurzen Hub des Stößels oder Kolbens eine große Bremswirkung gewährleistet.

Erfindungsgemäß wird diese Aufgabe bei einer Dämpfungsvorrichtung der eingangs angegebenen Art dadurch gelöst, dass der Hohlkörper mit mindestens einem Abschnitt eines wendelförmigen Innengewindestegs und/oder der Kolben oder Stößel mit mindestens einem Abschnitt eines wendelförmigen Außengewindestegs versehen sind, dass sich die Gewindestege gleitend aufeinander oder jeweils Nokken oder Zapfen des Hohlkörpers oder des Kolbens oder Stößels auf einem Gewindeabschnitt des anderen Teils abstützen und dass die Steigung der Gewindestege größer ist als die, bei der Selbsthemmung eintritt. Die erfindungsgemäße Dämpfungsvorrichtung gewährleistet dadurch mit einer sehr kurzen axialen Bewegung des Kolbens oder Stößels eine sehr große Bremskraft, dass der axialen Bewegung eine Drehbewegung überlagert ist, so dass durch die reibend aufeinander mit einer wendelförmigen oder spiraligen Bewegung gleitenden Teile in axialer Richtung eine sehr hohe Bremskraft erreicht wird.

Zweckmäßiger Weise ist eine Druckfeder zwischen dem Boden des Zylinders und dem Stößel oder Kolben eingespannt. Die Kraft der Druckfeder ist so bemessen, dass sie bei entlastetem Stößel oder Kolben diese in ihre ausgefahrene Stellung zu verschieben vermag.

Zwischen der Druckfeder und dem Stößel oder Kolben kann ein Zwischenstück angeordnet sein, das undrehbar mit der Druckfeder verbunden ist. Dieses Zwischenstück kann eine aufgeraute Stirnfläche aufweisen, die sich die Reibungskraft erhöhend auf dem Stößel oder dem Kolben abstützt. Das andere Ende der Druckfeder kann undrehbar an einem den Boden des Zylinders bildenden Deckel gehaltert sein.

In weiterer Ausgestaltung der Erfindung ist vorgesehen, dass der Stößel mit einem Abschnitt drehbar in eine Bohrung eines Kolbens greift, der mit mindestens einem Gewindeabschnitt oder Zapfen versehen ist.

Ist es erwünscht, dass der aus dem Zylinder austretende Zapfen des Stößels nur eine Bewegung in axialer Richtung ausführt, der keine Drehbewegung überlagert ist, kann der Stößel einen unrunden, mehreckigen oder mit Nuten oder Längskeilen versehen Querschnitt aufweisen und einen Rand oder Deckel des Zylinders mit komplementärem Querschnitt durchsetzen.

Nach einer anderen Ausführungsform wird die gestellte Aufgabe bei einer Dämpfungsvorrichtung nach dem Oberbegriff des Anspruchs 1 dadurch gelöst, dass der Kolben mit einer axialen Bohrung und mit mindestens einem Abschnitt eines wendelförmigen Innengewindestegs und der Stößel mit mindestens einem Abschnitt eines wendelförmigen Außengewindestegs versehen sind, dass der Kolben oder der Stößel axial verschieblich und drehbar und der andere Teil axial verschieblich und undrehbar in dem Hohlkörper geführt sind, dass der drehbar geführte Kolben oder Stößel mit Kupplungseinrichtungen versehen sind, die mit Gegenkupplungseinrichtungen eines in dem Hohlkörper gegen Widerstand verdrehbaren Elements in der vorgeschobenen Stellung des drehbaren Kolben oder Stößels kuppelbar sind, und dass die Steigung der Gewindestege größer ist als die, bei der Selbsthemmung eintritt.

Diese Ausführungsform der erfindungsgemäßen Dämpfungsvorrichtung ermöglicht zusätzlich zu der relativen Drehung des Kolbens zu dem in diesen eingeschraubten Stößel und der Axialverschiebung beider in dem Hohlkörper eine starke Bremswirkung auf kurzem Wege dadurch, dass das verdrehbare Element ein starkes bremsendes Gegenmoment auf den mit diesem gekuppeltem Kolben oder Stößel ausübt. Die Dämpfungsvorrichtung kann so ausgeführt sein, dass der undrehbare Teil, also entweder der in dem Hohlkörper axial verschieblich aber undrehbar geführte Kolben oder Stößel, aus dem Hohlkörper soweit herausgeführt ist, das er unter Eindrücken in den Hohlkörper den Stoß des zu bremsenden Teils aufnimmt.

Zweckmäßiger Weise ist der in den Kolben einschraubbare Stößel mit mindestens einem radialen Nocken oder einer Feder versehen, der oder die in einer Längsnut der Innenwand des Hohlkörpers oder einer diesen abschließenden Buchse geführt ist.

Der Stößel oder der Kolben kann auch dadurch undrehbar in dem Hohlkörper geführt sein, das er mit einer unrunden äußeren Kontur versehen ist, die durch einen komplementären Abschnitt des Hohlkörpers undrehbar gehalten ist.

In weiterer Ausgestaltung der Erfindung ist vorgesehen, dass das gegen ein bremsendes Drehmoment verdrehbare Element aus einem rohrförmigen Abschnitt besteht, der in einer Ringnut im Bodenbereich des Hohlkörpers drehbar gehalten ist. Der drehbare Abschnitt kann zusätzlich durch ein Fett hoher Viskosität in der Ringnut eingebettet sein. Dieses Fett erhöht die Reibung bzw. den Drehwiederstand des rohrförmigen Abschnitts. Zur Erhöhung der bremsenden Eigenschaften des Fetts hoher Viskosität können diesem klebende Bestandteile zugesetzt sein.

Zweckmäßiger Weise bestehen die Kupplungs- und Gegenkupplungseinrichtungen aus auf den ringförmigen Stirnseiten des rohrförmigen Abschnitts und des rohrförmigen Kolbens angeordneten sägezahnförmigen Zähnen, die beim Eindrücken des Stößels in kuppelndem Eingriff miteinander kommen. Diese sägezahnförmigen Zähne weisen im kuppelnden Eingriff zur Mitnahme des rohrförmigen Abschnitts etwa in axialer Richtung des Stößels verlaufende Flanken auf. Die anderen Flanken der sägezahnförmigen Zähne sind abgeschrägt, so dass durch Federkraft die im Eingriff befindlichen Teile wieder auseinander geschoben werden können, ohne dass das bremsende, verdrehbare Element die Trennung und das Ausschieben verhindert.

Zweckmäßiger Weise ist eine Druckfeder zwischen der Stirnseite des durch die Ringnut freigelegten Zapfens am Grund des Hohlkörpers und dem hinteren Ende des Stößels eingespannt.

Ausführungsbeispiele der Erfindung werden nachstehend an Hand der Zeichnung näher erläutert. In dieser zeigt
- Figur 1:: eine perspektivische Ansicht der erfindungsgemäßen Dämpfungsvorrichtung, die in einem Adaptergehäuse an einer Ecke eines Schranks gehaltert ist,
- Figur 2:: eine perspektivische Ansicht der auseinander gezogenen Einzelteile einer ersten Ausführungsform der erfindungsgemäßen Dämpfungsvorrichtung,
- Figur 3:: einen Längsschnitt durch die Dämpfungsvorrichtung nach Figur 2 im montierten Zustand,
- Figur 4:: eine perspektivische Darstellung der auseinander gezogenen Einzelteile einer zweiten Ausführungsform der erfindungsgemäßen Dämpfungsvorrichtung,
- Figur 5:: einen Längsschnitt durch die Dämpfungsvorrichtung nach Figur 4 im montierten Zustand,
- Figur 6:: einen Längsschnitt durch eine dritte Ausführungsform der erfindungsgemäßen Dämpfungsvorrichtung,
- Fig. 7 u. 8:: perspektivische Ansichten eines Doppellenkerscharniers, in deren Scharniertopf Dämpfungsvorrichtungen der erfindungsgemäßen Art integriert sind,
- Figur 9:: eine weitere Ausführungsform der erfindungsgemäßen Dämpfungsvorrichtung im auseinander gezogenen Zustand seiner Einzelteile und mit einer eingekreisten vergrößerten Darstellung A einer Einzelheit,
- Figur 10:: einen Längsschnitt durch die montierte Dämpfungsvorrichtung nach Figur 14 im ausgeschobenen Zustand seines Stößels und
- Figur 11:: eine der Figur 10 entsprechenden Darstellung im eingedrückten Zustand des Stößels und mit einer vergrößert dargestellten eingekreisten Einzelheit B.

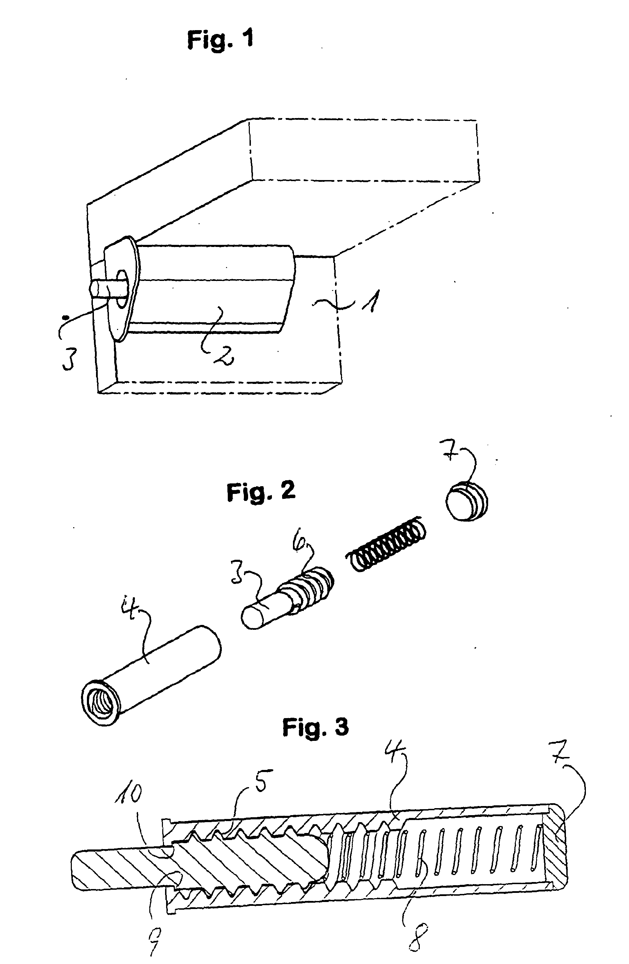

Aus Figur 1 ist die obere linke Ecke eines Schranks ersichtlich, in der an der Innenseite einer Seitenwand 1 in einem Adaptergehäuse 2, das an der Seitenwand befestigt ist, eine Dämpfungsvorrichtung gehaltert ist, deren Stößel 3 die Stirnseite der Seitenwand 1 in der Weise überragt, dass der Schlag einer auf dieses treffenden Tür gedämpft wird.

Eine erste Ausführungsform der erfindungsgemäßen Dämpfungsvorrichtung ist aus den Figuren 2 und 3 ersichtlich. Diese besteht aus einem Zylinder 4, der an seiner offenen Seite mit einem Innengewinde 5 versehen ist. In dieses Innengewinde ist mit Spiel das Außengewinde 6 des Stößels 3 eingeschraubt. Der rechte Teil des Zylinders 4 ist in der dargestellten Weise glattwandig ohne Innengewinde ausgeführt. Der Zylinder 4 ist durch einen Deckel 7 geschlossen. Zwischen dem Deckel 7 und dem Stößel 3 ist eine Druckfeder 8 eingespannt. Der Stößel weist zwischen seinem Gewindeabschnitt 6 und seinem runden, glattwandigen aus dem Zylinder austretenden Abschnitt 3 eine Stufe 9 auf, mit der er sich auf eine Stufe 10 abstützt, die durch den nach innen hin eingezogenen Rand des Zylinders 4 gebildet ist.

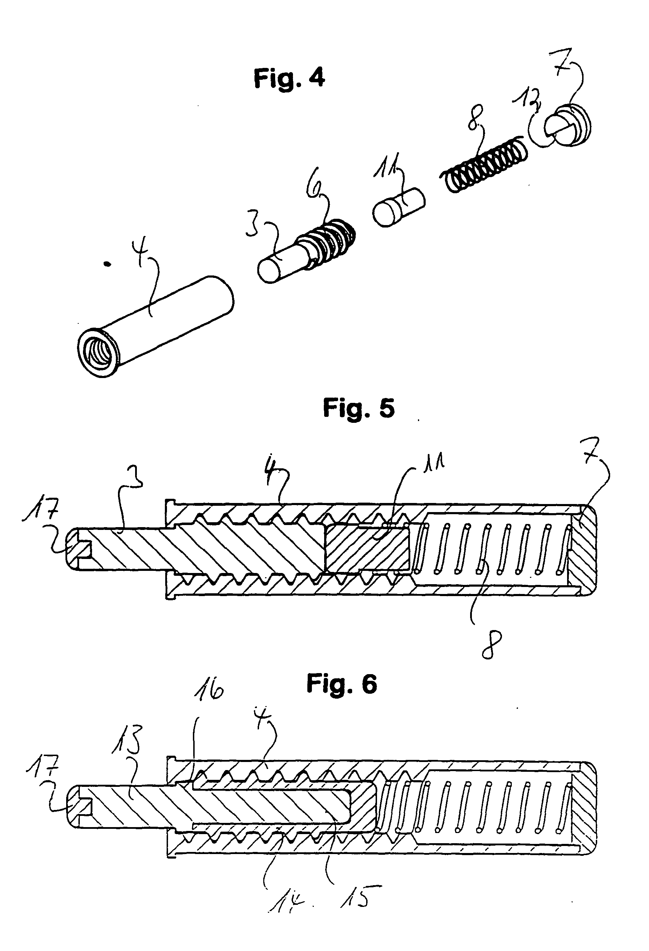

Das Ausführungsbeispiel nach den Figuren 4 und 5 unterscheidet sich von dem nach den Figuren 2 und 3 im wesentlichen nur dadurch, dass das stößelseitige Ende der Feder 8 undrehbar an einem im Durchmesser verjüngten Abschnitt eines Bolzens 11 gehaltert ist, der sich mit seinem im Durchmesser verdickten Abschnitt auf dem Stößel 3 abstützt. Die Stirnfläche des verdickten Endteils des Bolzens 11 kann aufgeraut sein, so dass sich diese mit erhöhter Reibung auf der ebenen Stirnfläche des Stößels 3 abstützt. Der den Zylinder 4 schließende Deckel ist an seiner inneren Seite mit einer Stufe 12 versehen, an der sich das äußere Ende der Feder 8 undrehbar abstützt.

Bei dem Ausführungsbeispiel nach Figur 6 sind der Stößel 13 und das mit einem Außengewinde versehene kolbenförmige Teil 14 voneinander getrennt. Das kolbenförmige Teil 14 besteht aus einem mit einem Außengewinde versehenen Bolzen, das mit einer Sacklochbohrung versehen ist. In diese Sacklochbohrung greift mit Spiel ein Zapfen 15 des Stößels 13 ein, so dass der kolbenförmige Bolzen 14 relativ zu dem Stößel 13 drehbar ist. Der Stößel 13 ist mit einem Bund 16 versehen, auf dessen innerer Ringstufe sich die ringförmige Stirnseite des kolbenartigen Bolzens 13 abstützt. Die äußere Ringstufe des Bundes 16 liegt im ausgefahrenen Zustand des Stößels an einer Ringstufe des Rands des Zylinders 4 an. Der an die Ringstufe 16 anschließende Teil des Stößels 13 ist unrund ausgeführt, wobei auch die Austrittsöffnung aus dem Zylinder 4 komplementär unrund ausgeführt ist, so dass der Stößel 13 axialverschieblich aber undrehbar an dem Zylinder 4 gehaltert ist. Auf die äußere Stoßfläche des Stößels 13 ist eine Kappe 17 aus elastomerem Material aufgesetzt.

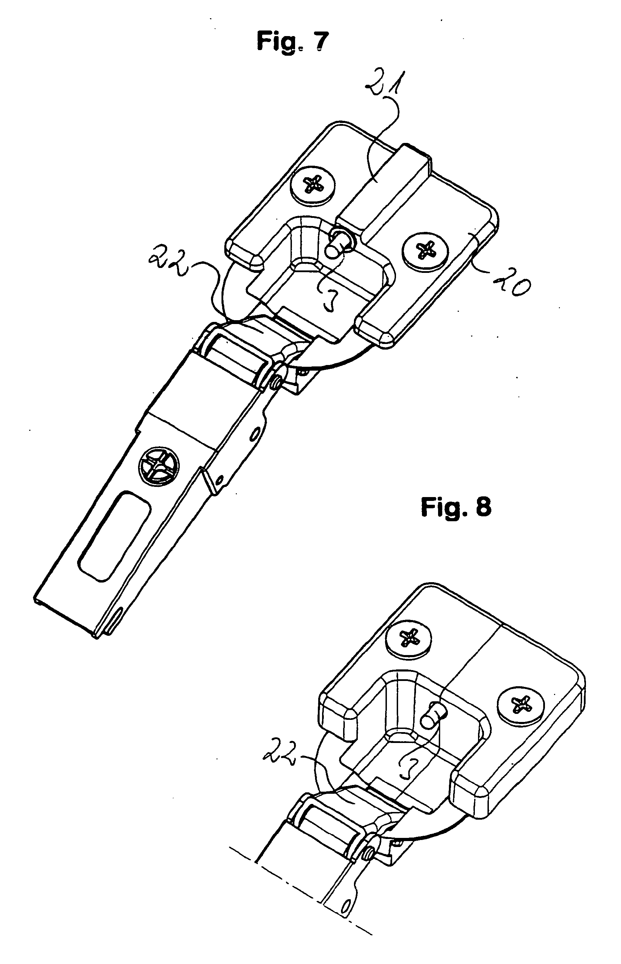

Aus Figur 7 ist eine perspektivische Darstellung eines Doppellenkerscharniers ersichtlich, bei dem der Befestigungsflansch 20 des Scharniertopfs in seiner Mittelebene mit einem gehäuseartigen Teil 21 versehen ist, in dem eine Dämpfungsvorrichtung der erfindungsgemäßen Art in der Weise gehaltert ist, dass deren Stößel 3 in die topfförmige Ausnehmung ragt. Beim Schließen des Scharniers stößt der äußere Lenker 22 des Doppellenkerscharniers auf den Stößel 3, so dass er mit großer Bremskraft auf kurzem Weg gedämpft wird.

Die Ausführungsform nach Figur 8 unterscheidet sich von der nach Figur 7 nur dadurch, dass der Scharniertopf in seiner Längsmittelebene geteilt und die dadurch gebildeten Hälften in der Weise zusammengesetzt sind, dass sich der Zylinder der Dämpfungsvorrichtung aus zugewandten Ausnehmungen beider geteilten Hälften zusammensetzen lässt. Der Stößel 3 der Dämpfungsvorrichtung ragt wieder in die topfartige Ausnehmung in der Weise, dass der äußere Lenker 22 auf diesen trifft und beim Schließen eine große Bremskraft erfährt.

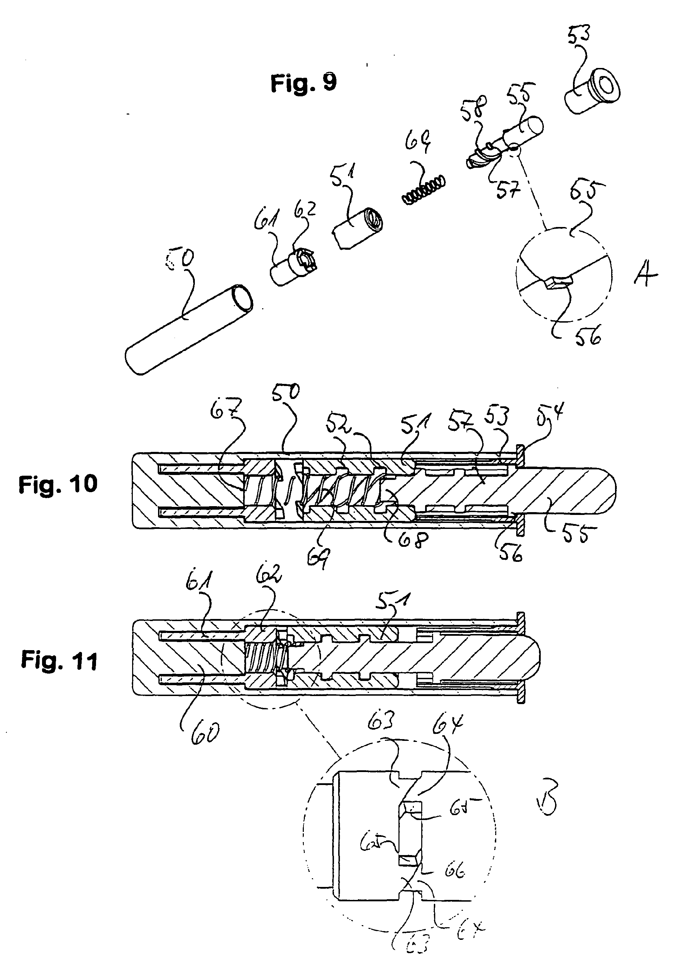

Die in den Figuren 9 bis 11 dargestellte Ausführungsform der erfindungsgemäßen Dämpfungsvorrichtung besteht aus einem Hohlkörper in Form eines Zylinders 50. In dem Zylinder 50 ist ein mit einer Durchgangsbohrung versehener Kolben 51 axial verschieblich und frei drehbar geführt. Der rohrförmige Kolben 51 ist an seiner Innenwandung mit einem Innengewinde 52 versehen. Der Zylinder 50 ist an seiner rechten offenen Seite durch eine Buchse 53 geschlossen, die sich mit einem Flansch 54 auf dem Rand des Zylinders abstützt und mit diesem durch bekannte Mittel drehfest und in axialer Richtung unverschieblich verbunden ist. In der Buchse 53 ist ein Stößel 55 axial verschieblich, aber undrehbar geführt. Der Stößel überragt den Flansch 54 im wesentlichen um seine in den Zylinder unter Stoßwirkung eindrückbaren Länge. Der Stößel weist im Anschluss an seinen den Zylinder überragenden Abschnitt auf gegenüberliegenden Seiten Nocken 56 auf, die sich in dem aus Figur 15 ersichtlichen ausgeschobenen Zustand des Stößels 55 auf einer Ringstufe der Buchse 53 abstützen, die durch nach innen hin eingezogene Randabschnitte der Buchse 53 gebildet sind. Die Buchse 53 ist an ihrem in den Zylinder 50 greifenden rohrförmigen Abschnitt mit gegenüberliegenden axial verlaufenden Nuten versehen, in denen die Nocken 56, die eine Drehsicherung bilden, geführt sind. Die Nocken 56 sind in der eingekreisten Einzelheit A in Figur 9 in vergrößerter Form dargestellt. Im Anschluss an die Nocken 56 ist der Stößel 55 mit einem Abschnitt 57 versehen, der einen wendelförmig verlaufenden Gewindesteg 58 mit einer Steigung trägt, die größer ist als die, bei der Selbsthemmung eintritt. Der mit dem Gewinde 58 versehene Abschnitt 57 des Stößels 55 ist bei dessen Eindrücken in den Zylinder 55 in das Innengewinde 52 des rohrförmigen Kolbens 51 einschraubbar.

Durch eine Ringnut im Bodenbereich des Zylinders 50 ist ein Zapfen 60 freigeschnitten. In die Ringnut ist mit Spiel ein Rohrstück 61 eingesetzt. Das Rohrstück 61 weist im Anschluss an die Stirnseite des Zapfens 60 einen verbreiterten Abschnitt 62 auf, der innere und äußere Ringstufen bildet, mit denen sich dieser verbreiterte Abschnitt 62 auf Ringstufen abstützt, die beidseits der Nut zwischen dieser und der inneren Zylinderwandung einerseits und andererseits zwischen dieser und der Stirnseite des Zapfens 60 gebildet sind.

Die einander zugewandten ringförmigen Stirnseiten des verbreiterten Abschnitts 62 des Rohrstücks 61 und des rohrförmigen Kolbens 51 sind mit sägezahnförmigen Zähnen 63, 64 versehen, die in der eingekreisten Einzelheit B der Figur 11 vergrößert dargestellt sind. Die Zähne 63, 64 weisen in axialer Richtung verlaufende Flanken 65 und schräg verlaufende Flanken 66 auf. Zwischen der Stirnseite 67 des Zapfens 60 und dem im Durchmesser verjüngten Ende 68 des Stößels 55 ist eine Druckfeder 69 eingespannt. Diese Druckfeder 29 ist bestrebt, den Stößel 55 aus seiner aus Figur 11 ersichtlichen eingedrückten Stellung seine aus Figur 10 ersichtliche ausgeschobene Stellung zu drücken.

Das Rohrstück 61 ist durch ein Fett hoher Viskosität, das auch zur Erhöhung seiner Zähigkeit klebende Bestandteile aufweisen kann, in der Ringnut im Bodenbereich des Zylinders 50 gehalten, so dass es seiner Verdrehung einen erhöhten Widerstand entgegensetzt.

Wird der den Zylinder 50 überragende Abschnitt des Stößels 55 durch einen Stoß oder Druck beaufschlagt, schiebt er auf kurzem Wege den ringförmigen Kolben 51, in den der Stößel bereits eingeschraubt ist, gegen die Stirnseite des verbreiterten rohrförmigen Abschnitts 62, so dass die Zähne 63, 64 nach Art einer Klauenkupplung miteinander in Eingriff kommen. Sobald der rohrförmige Kolben 51 gegen das rohrförmige Teil 61, 62 stößt, wird er durch weiteres Eindrücken des Stößels 55 durch Abgleiten der Innen- und Außengewindestege aufeinander in eine Linksdrehung versetzt, so dass der rohrförmige Kolben 51 mit dem rohrförmigen Abschnitt 61, 62 in eine gekuppelte Verbindung gelangt. Da sich der rohrförmige Abschnitt 61, 62 nur gegen einen erhöhten Reibungswiderstand drehen lässt, übt er beim weiteren Eindrücken des Stößels 55 in den Zylinder 50 auf diesen eine stark dämpfende Wirkung aus. Ist die Stoßwirkung und ein auf den Stößel 55 wirkender Druck beendet, schiebt die Druckfeder 59 den Stößel unter schraubender Rückdrehung des rohrförmigen Kolbens 51 wieder in seine aus Figur 10 ersichtliche Ausgangsstellung.

## Patentansprüche

1. Dämpfungsvorrichtung für bewegliche Möbelteile, beispielsweise für Türen oder Schubladen, bestehend aus einem in einen Hohlkörper, z. B. einem Zylinder, gleitend geführten Stößel, der durch Federkraft in seine ausgeschobene Stellung beaufschlagt ist,
wobei der Hohlkörper (4) mit mindestens einem Abschnitt eines wendelförmigen Innengewindestegs (5) und der Stößel (3) mit mindestens einem Abschnitt eines wendelförmigen Außengewindestegs (6) versehen sind,
wobei sich die Gewindestege (5, 6) gleitend aufeinander abstützen und
wobei die Steigung der Gewindestege größer ist als die, bei der Selbsthemmung eintritt,
**dadurch gekennzeichnet,**
**dass** zwischen der Druckfeder (8) und dem Stößel (3) ein Zwischenstück (11) angeordnet ist, das undrehbar mit der Druckfeder (8) verbunden ist.

2. Dämpfungsvorrichtung nach Anspruch 1, **dadurch gekennzeichnet, dass** die Druckfeder (8) zwischen dem Boden (7) des Zylinders (4) und dem Stößel (3) oder Kolben (14) eingespannt ist.

3. Dämpfungsvorrichtung nach Anspruch 1, **dadurch gekennzeichnet, dass** sich das Zwischenstück (11) mit aufgerauter Stirnfläche auf den Stößel (3) oder Kolben abstützt.

4. Dämpfungsvorrichtung nach einem der Ansprüche 1 bis 3, **dadurch gekennzeichnet, dass** die Druckfeder (8) undrehbar an einem den Boden des Zylinders bildenden Deckel (7) gehaltert ist.

5. Dämpfungsvorrichtung für bewegliche Möbelteile, beispielsweise für Türen oder Schubladen, bestehend aus einem in einen Hohlkörper, z. B. einem Zylinder, gleitend geführten Kolben, der durch Federkraft in seine ausgeschobene Stellung beaufschlagt ist,
wobei der Hohlkörper (4) mit mindestens einem Abschnitt eines wendelförmigen Innengewindestegs (5) und der Kolben (14) mit mindestens einem Abschnitt eines wendelförmigen Außengewindestegs (6) versehen sind,
wobei sich die Gewindestege (5, 6) gleitend aufeinander abstützen und
wobei die Steigung der Gewindestege größer ist als die, bei der Selbsthemmung eintritt,
**dadurch gekennzeichnet,**
**dass** ein Stößel (3) mit einem Abschnitt (15) drehbar in eine Bohrung des Kolbens (14) greift.

6. Dämpfungsvorrichtung nach Anspruch 5, **dadurch gekennzeichnet, dass** der aus dem Zylinder (4) austretende Zapfen des Stößels (13) einen unrunden, mehreckigen oder mit Nuten oder Längskeilen versehenen Querschnitt aufweist und einen Rand oder Deckel des Zylinders (4) mit komplementärem Durchbruch durchsetzt.

7. Dämpfungsvorrichtung für bewegliche Möbelteile, beispielsweise für Türen oder Schubladen, bestehend aus einem in einen Hohlkörper, z. B. einem Zylinder (50) gleitend geführten Kolben, der durch Federkraft in seine ausgeschobene Stellung beaufschlagt ist,
**dadurch gekennzeichnet,**
**dass** der Kolben (51) mit einer axialen Bohrung und mit mindestens einem Abschnitt eines wendelförmigen Innengewindestegs (52) und ein in den Kolben (51) eingeschraubter Stößel (55) mit mindestens einem Abschnitt eines wendelförmigen Außenstegs (58) versehen sind,
**dass** sich die Gewindestege (52, 58) gleitend aufeinander oder jeweils Nokken oder Zapfen des Kolbens oder des Stößels auf einem Gewindeabschnitt des anderen Teils abstützen,
**dass** der Kolben (51) oder der Stößel (55) axial verschieblich und drehbar und der andere Teil axial verschieblich und undrehbar in dem Hohlkörper (50) geführt sind,
**dass** der drehbar geführte Kolben (51) oder Stößel mit Kupplungseinrichtungen (64) versehen sind, die mit Gegenkupplungseinrichtungen (63) eines in dem Hohlkörper (50) gegen Widerstand verdrehbaren Elements (61) in der vorgeschobenen Stellung des drehbaren Kolbens oder Stößels kuppelbar sind, und
**dass** die Steigung der Gewindestege größer ist als die, bei der Selbsthemmung eintritt.

8. Dämpfungsvorrichtung nach Anspruch 7 **dadurch gekennzeichnet, dass** der in den Kolben (51) einschraubbare Stößel (55) mit mindestens einem radialen Nocken (56) oder einer Feder versehen ist, der oder die in einer Längsnut in der Innenwand des Hohlkörpers (50) oder einer diesen abschließenden Buchse (53) geführt sind.

9. Dämpfungsvorrichtung nach Anspruch 7 oder 8, **dadurch gekennzeichnet, dass** das gegen ein bremsendes Drehmoment verdrehbare Element aus einem rohrförmigen Abschnitt (61) besteht, der in einer Ringnut im Bodenbereich des Hohlkörpers (50) drehbar gehalten ist.

10. Dämpfungsvorrichtung nach Anspruch 9, **dadurch gekennzeichnet, dass** der rohrförmige Abschnitt (61) durch ein Fett hoher Viskosität in der Ringnut eingebettet ist.

11. Dämpfungsvorrichtung nach Anspruch 9 oder 10, **dadurch gekennzeichnet, dass** die Kupplungs- und Gegenkupplungseinrichtungen aus auf den ringförmigen Stirnseiten des ringförmigen Abschnitts und des rohrförmigen Kolbens angeordneten sägezahnförmigen Zähnen (63, 64) bestehen, die beim Eindrücken des Stößels in ihren kupplenden Eingriff miteinander geraten.

12. Dämpfungsvorrichtung nach einem der Ansprüche 7 bis 11, **dadurch gekennzeichnet, dass** eine Druckfeder (69) zwischen der Stirnseite des durch die Ringnut freigelegten Zapfens (60) am Grund des Hohlkörpers (50) und dem hinteren Ende des Stößels (55) eingespannt ist.

## Claims

1. Damping device for movable furniture parts, for example for doors or drawers, consisting of a plunger slidably guided in a hollow body, e. g. a cylinder, with spring force being applied to said plunger in its extended position,
- wherein the hollow body (4) is provided with at least one section of a spiral internal thread web (5) and the plunger (3) is provided with at least one section of a spiral external thread web (6),
- wherein the thread webs (5, 6) slidably support each other, and
- wherein the pitch of the thread webs is greater than that which occurs in self-locking,
**characterized in that** an intermediate piece (11) is arranged between the pressure spring (8) and the plunger (3), said piece being connected non-rotatably with the pressure spring (8).

2. Damping device according to claim 1, **characterized in that** the pressure spring (8) is clamped between the bottom (7) of the cylinder (4) and the plunger (3) or piston (14).

3. Damping device according to claim 1, **characterized in that** the intermediate piece (11) with roughed up face supports itself on the plunger (3) or the piston.

4. Damping device according to any one of the claims 1 to 3, **characterized in that** the pressure spring (8) is mounted non-rotatably on a cover (7) forming the bottom of the cylinder.

5. Damping device for movable furniture parts, for example for doors or drawers, consisting of a piston slidably guided in a hollow body, e. g. a cylinder, with spring force being applied to said piston in its extended position,
- wherein the hollow body (4) is provided with at least one section of a spiral internal thread web (5) and the piston (14) is provided with at least one section of a spiral external thread web (6),
- wherein the thread webs (5, 6) slidably support each other, and
- wherein the pitch of the thread webs is greater than that which occurs in self-locking,
**characterized in that** a plunger (3) with one section (15) engages rotatably into a boring of the piston (14).

6. Damping device according to claim 5, **characterized in that** the pin of the plunger (13) issuing from the cylinder (4) comprises a non-circular, polygonal cross-section or one provided with grooves or keys and penetrates an edge or cover of the cylinder (4) with a complementary opening.

7. Damping device for movable furniture parts, for example for doors or drawers, consisting of a piston slidably guided in a hollow body, e. g. a cylinder (50), with spring force being applied to said piston in its extended position,
**characterized in that** the piston (51) is provided with an axial bore and with at least one section of a spiral internal thread web (52) and a plunger (55) screwed into the piston (51), said plunger being provided with at least one section of a spiral external thread web (58),
the thread webs (52, 58) slidably support each other or, respectively, cams or pins of the piston or the plunger on a thread section of the other part,
the piston (51) or the plunger (55) is axially movable and rotatable, and the other part is axially displaceably and non-rotatably guided in the hollow body (50),
the rotatably guided piston (51) or plunger is provided with coupling devices (64) which can be coupled with counter-coupling devices (63) of an element (61) rotatable in the hollow body (50) against resistance in the extended position of the rotatable piston or plunger, and the pitch of the thread webs is larger than that which occurs in self-locking.

8. Damping device according to claim 7, **characterized in that** the plunger (55) screwable into the piston (51) is provided with at least one radial cam (56) or a spring which is guided in a longitudinal groove in the inside wall of the hollow body (50) or a bushing (53) closing it off.

9. Damping device according to claim 7 or 8, **characterized in that** the element twistable against a braking torque consists of a tubular section (61) which is rotatably held in a ring groove in the bottom area of the hollow body (50).

10. Damping device according to claim 9, **characterized in that** the tubular section (61) is embedded in the ring groove by means of a grease of high viscosity.

11. Damping device according to claim 9 or 10, **characterized in that** the coupling and counter-coupling devices consist of saw teeth (63, 64) arranged on the ring-shaped faces of the ring-shaped section and the tubular plunger, said teeth coming to their coupling engagement when the plunger is pushed in.

12. Damping device according to any one of the claims 7 to 11, **characterized in that** a pressure spring (69) is clamped between the face of the pin (60) exposed by the ring groove on
the base of the hollow body (50) and the rear end of the plunger (55).

## Revendications

1. Dispositif d'amortissement pour des parties de meuble mobiles, par exemple, pour des portes ou tiroirs, composé d'un coulisseau guidé à coulissement dans un corps creux, par exemple un cylindre, qui est sollicité par une force élastique dans sa position extraite,
- le corps creux (4) étant pourvu d'au moins une section d'une nervure à filetage interne hélicoïdale (5) et le coulisseau (3) étant pourvu d'au moins une section d'une nervure à filetage externe hélicoïdale (6),
- les nervures à filetage (5, 6) s'appuyant à coulissement l'une sur l'autre et
- la pente des nervures à filetage étant supérieure à celle lors de laquelle le blocage automatique se produit,
**caractérisé en ce qu'**une pièce intermédiaire (11) qui est reliée de manière non rotative au ressort à pression (8), est disposée entre le ressort à pression (8) et le coulisseau (3).

2. Dispositif d'amortissement selon la revendication 1, **caractérisé en ce que** le ressort à pression (8) est serré entre le fond (7) du cylindre (4) et le coulisseau (3) ou piston (14).

3. Dispositif d'amortissement selon la revendication 1, **caractérisé en ce que** la pièce intermédiaire (11) s'appuie avec une surface frontale rugueuse sur le coulisseau (3) ou piston.

4. Dispositif d'amortissement selon l'une quelconque des revendications 1 à 3, **caractérisé en ce que** le ressort à pression (8) est supporté de manière non rotative sur un couvercle (7) formant le fond du cylindre.

5. Dispositif d'amortissement pour parties de meuble mobiles, par exemple, pour des portes ou tiroirs, composé d'un piston guidé à coulissement dans un corps creux, par exemple un cylindre, qui est sollicité par une force élastique dans sa position extraite,
- le corps creux (4) étant pourvu d'au moins une section d'une nervure à filetage interne hélicoïdale (5) et le piston (14) étant pourvu d'au moins une section d'une nervure à filetage externe hélicoïdale (6),
- les nervures à filetage (5, 6) s'appuyant à coulissement l'une sur l'autre et
- la pente des nervures à filetage étant supérieure à celle lors de laquelle le blocage automatique se produit,
**caractérisé en ce qu'**un coulisseau (3) s'engage avec une section (15) à rotation dans un alésage du piston (14).

6. Dispositif d'amortissement selon la revendication 5, **caractérisé en ce que** le tampon sortant du cylindre (4) du coulisseau (13) présente une section transversale ovale, polygonale ou pourvue de rainures ou de clavettes longitudinales et traverse un bord ou couvercle du cylindre (4) avec un ajour complémentaire.

7. Dispositif d'amortissement pour parties de meuble mobiles, par exemple, pour des portes ou tiroirs, composé d'un piston guidé à coulissement dans un corps creux, par exemple un cylindre (50), qui est sollicité par une force élastique dans sa position extraite,
**caractérisé en ce que** le piston (51) est pourvu d'un alésage axial et d'au moins une section d'une nervure à filetage interne hélicoïdale (52) et un coulisseau (55) vissé dans le piston (51) est pourvu d'au moins une section d'une nervure externe hélicoïdale (58),
que les nervures à filetage (52, 58) s'appuient à coulissement l'une sur l'autre ou des cames ou tampons du piston ou du coulisseau s'appuient à chaque fois sur une section de filetage de l'autre pièce,
que le piston (51) ou le coulisseau (55) sont guidés de manière déplaçable axialement et rotative et l'autre pièce est guidé de manière déplaçable axialement et non rotative dans le corps creux (50),
que le piston (51) ou coulisseau guidé à rotation est pourvu de dispositifs d'accouplement (64) qui peuvent être accouplés avec des dispositifs d'accouplement conjugué (63) d'un élément (61) rotatif contre une résistance dans le corps creux (50) dans la position avancée du piston ou coulisseau rotatif, et
que la pente des nervures à filetage est supérieure à celle lors de laquelle le blocage automatique se produit.

8. Dispositif d'amortissement selon la revendication 7, **caractérisé en ce que** le coulisseau (55) pouvant être vissé dans le piston (51) est pourvu d'au moins une came radiale (56) ou un ressort qui est guidé(e) dans une rainure longitudinale dans la paroi interne du corps creux (50) ou d'une douille (53) terminant celui-ci.

9. Dispositif d'amortissement selon la revendication 7 ou 8, **caractérisé en ce que** l'élément rotatif contre un couple de rotation de freinage se compose d'une section tubulaire (61) qui est maintenue à rotation dans une rainure annulaire dans la zone de fond du corps creux (50).

10. Dispositif d'amortissement selon la revendication 9, **caractérisé en ce que** la section tubulaire (61) est encastrée par une graisse de haute viscosité dans la rainure annulaire.

11. Dispositif d'amortissement selon la revendication 9 ou 10, **caractérisé en ce que** les dispositifs d'accouplement et d'accouplement conjugué se composent de dents (63, 64) en forme de dents de scie, disposées sur les côtés frontaux annulaires de la section annulaire et du piston tubulaire qui parviennent ensemble dans leur engagement d'accouplement lors de la poussée du coulisseau.

12. Dispositif d'amortissement selon l'une quelconque des revendications 7 à 11, **caractérisé en ce qu'**un ressort à pression (69) est serré entre le côté frontal du tampon (60) libéré par la rainure annulaire sur la base du corps creux (50) et l'extrémité arrière du coulisseau (55).
